# EUROPEAN PATENT SPECIFICATION

(11) **EP 0 605 576 B1**
(45) Date of publication and mention of the grant of the patent: **02.01.1997**
(21) Application number: 92920595.3
(22) Date of filing: 23.09.1992
(51) Int. Cl.: F02B 17/00, F02B 19/12

(54) **TWO STROKE INTERNAL COMBUSTION ENGINE**
ZWEITAKTBRENNKRAFTMASCHINE
MOTEUR A COMBUSTION INTERNE A DEUX TEMPS

(30) Priority: 23.09.1991 AU PK8492/91
(43) Date of publication of application: 13.07.1994
(73) Proprietor: Powell, Brian Leslie, New South Wales, 2630 (AU)
(72) Inventor: Powell, Brian Leslie, New South Wales, 2630 (AU)
(74) Representative: Gordon, Michael Vincent
(86) International application number: AU9200507
(87) International publication number: WO9306348

(56) References cited:
- FR-A- 661 957
- GB-A- 683 162
- GB-A- 724 037
- GB-A- 830 336
- GB-A- 1 433 147
- US-A- 2 285 671
- US-A- 2 884 913
- US-A- 3 113 561

## Description

The invention relates to an internal combustion engine and, more particularly, to an internal combustion engine which operates in accordance with a two stroke cycle. The invention is applicable to any two stroke internal combustion engine such as those having a conventional crankshaft and connecting rod as well as crankless engines.

Although two stroke internal combustion engines have been known for more than a century, they still have significant drawbacks and they have had limited application. There are heating problems normally experienced with two stroke internal combustion engines. Furthermore, the exhaust emissions from such engines include several atmospheric pollutants such as carbon monoxide, hydrocarbons and nitrogen oxides.

Carbon monoxide is a colourless, odourless, poisonous gas, slightly lighter than air. The presence of this noxious gas in exhaust emissions is the result of incomplete fuel combustion in which carbon is only partly oxidized to carbon monoxide instead of being fully oxidized to carbon dioxide. This is due to insufficient oxygen in the combustion chamber. On the other hand, most conventional combustion chambers respond adversely to oversupply of oxygen or to a "lean mixture" as it is normally called.

The presence of hydrocarbons in exhaust emissions also represents unburned and wasted fuel. Generally, the percentage of hydrocarbons is high in emissions from two stroke engines and this is particularly due to the nature in which the engines are scavenged. Although gaseous hydrocarbons at concentrations normally found in the atmosphere are not toxic, they are a major pollutant because of their role in forming photochemical smog.

Nitrogen oxides are produced when fuel is burned at very high temperatures in the presence of oxygen. Nitrogen oxides combine with hydrocarbons to form a complex variety of secondary pollutants called photochemical oxidants which contribute to the formation of smog. The presence of nitrogen oxides in exhaust emissions has become a major problem in all conventional two stroke internal combustion engines, particularly where efforts have been made to reduce carbon monoxide by burning lean mixtures. Some experimental units have been successful in burning lean mixtures, but the excess oxygen in the combustion chamber converts to nitrogen oxides, which in the past have only been able to be removed by installing an expensive catalytic converter.

Among the oxides of nitrogen forming air pollutants, nitric oxide (NO) and nitrogen dioxide (NO₂) occur most frequently. Nitric oxide is a colourless, toxic gas formed from nitrogen and oxygen at high temperatures. It converts to nitrogen dioxide, an irritant and poison, in the exhaust of an internal combustion engine.

The formation of nitrogen oxides is a result of excess oxygen, combustion chamber temperatures above 1650°C and the dwell period of the piston at top dead centre. The dwell period cannot be reduced in a conventional crankshaft engine. However, it has been found that if the high temperature zone is removed from the location of excess oxygen, the generation of nitrogen oxides is inhibited.

It is an object of the invention to minimise harmful emissions from a two stroke internal combustion engine.

It is also an object of the invention to minimise the heating problems normally associated with known two stroke internal conmbustion engines.

It is known from GB-A-724037 for a two stroke internal combustion engine to comprise a cylinder, a compression chamber in the cylinder, at least one piston adapted to reciprocate in the compression chamber, at least one inlet port communicating with the compression chamber, means supplying in operation scavenging air into the compression chamber through the at least one inlet port, at least one exhaust port for the discharge of scavenging air and products of combustion from the compression chamber, a small external combustion chamber having restricted communication with the compression chamber, means introducing in operation a fuel rich fuel/air mixture into the combustion chamber and ignition means mounted in the combustion chamber to ignite the fuel rich fuel/air mixture therein.

In accordance with the present invention, however, such a two stroke internal combustion engine is characterised in that said supplying means is an external blower such that in operation the scavenging air is supplied at high pressure, and said introducing means is such that in operation a part of the fuel rich fuel/air mixture passes before ignition into the compression chamber and forms a fuel lean mixture with the scavenging air in the compression chamber, the fuel lean mixture subsequently being ignited by burning fuel from the combustion chamber.

Not only is the formation of nitrogen oxides inhibited, but there is substantially complete combustion of fuel due to the abundance of oxygen in the compression chamber, thus minimising the emission of carbon monoxide and hydrocarbons. The high volume of scavenging air passing through the compression chamber is sufficient both to effectively purge and cool the cylinder. Because of the division of fuel between a fuel rich mixture in the small combustion chamber, and a fuel lean mixture in the compression chamber, significant fuel economy characterises the two stroke internal combustion engine of the invention.

Preferably, the at least one inlet port is designed to cause swirling movement of scavenging air in the compression chamber, with either the at least one inlet port being provided with a fin to deflect scavenging air entering the compression chamber to cause the swirling movement, or the at least one inlet port being disposed angularly so that scavenging air enters the compression chamber in a substantially tangential direction to produce the swirling movement.

A narrow passage may provide the restricted communication between the combustion chamber and the compression chamber, with the narow passage being offset so that it enters the compression chamber in a substantially tangential direction and being arranged so that said part of the fuel rich fuel/air mixture passes into the compression chamber in the same direction as the swirling movement of the scavenging air therein.

In various modifications: an additional port is provided in the combustion chamber to permit scavenging thereof; the external blower also supplies air for the fuel rich fuel/air mixture to be injected into the combustion chamber; and a plurality of the combustion chambers are spaced around the compression chamber and are in communication therewith.

The invention is described, in more detail, with reference to the accompanying drawings, which illustrate two embodiments of the invention, in which:-
Fig.1 is a sectional view of a cylinder assembly of a single piston two stroke internal combustion engine according to one embodiment of the invention;
Fig.2 is a sectional view of a cylinder assembly of a two stroke internal combustion engine having opposed pistons according to a second embodiment of the invention;
Fig.3 is a sectional view at right angles to Figs.1 and 2; and
Fig.4 is another sectional view at right angles to Fig.2.

### Detailed Description of the Embodiments

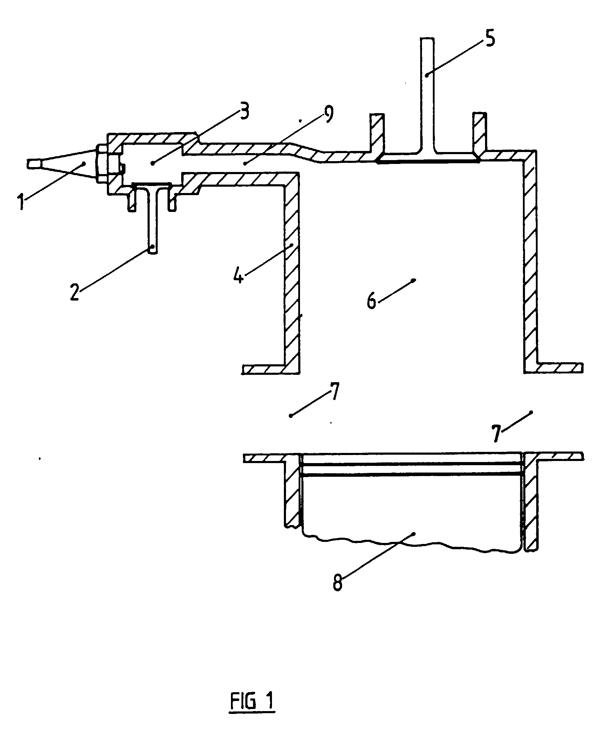

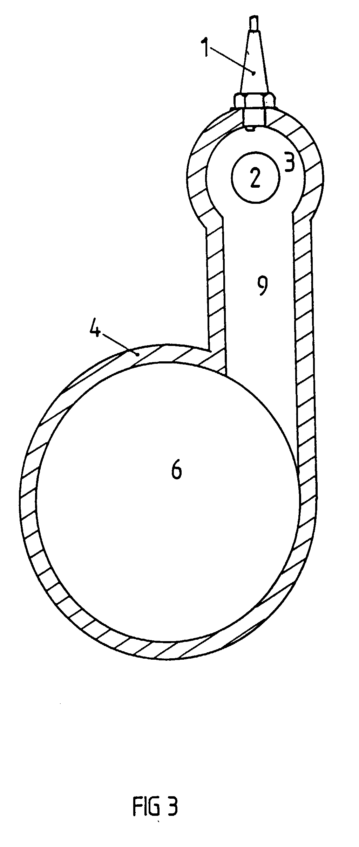

Illustrated in Fig.1 is a cylinder assembly of a two stroke internal combustion engine having a single piston 8 adapted to reciprocate in a cylinder 4. Piston 8 is connected to a conventional connecting rod and crankshaft (not shown). Cylinder 4 is formed with a small external combustion chamber 3 in addition to main compression chamber 6. Combustion chamber 3 is spaced from compression chamber 6 but has restricted communication therewith along a narrow passage 9. As shown in Fig.3, passage 9 is offset so that it enters compression chamber 6 in a substantially tangential direction.

Spark plug 1 is mounted on the external combustion chamber 3 for ignition of fuel/air mixture therein. The fuel/air mixture is injected into combustion chamber 3 through an inlet port controlled by poppet valve 2. The air is supplied by a blower (not shown).

A blast of high pressure scavenging air is forced into compression chamber 6 through an inlet port controlled by a poppet valve 5. Scavenging air together with products of combustion exit compression chamber 6 by way of one or more exhaust ports 7. Opening and closing of exhaust ports 7 is effected by piston 8 as it reciprocates in cylinder 4.

To supply a large volume of high pressure scavenging air, a blower (not shown) is provided. The same blower may be used to supply air for the fuel mix as well as air for scavenging purposes, and, if desired for supercharging. The blower may be driven by the engine and, if desired, may be turbo exhaust assisted. The provision of a large charge of high pressure air insures an adequate throughput of scavenging air to not only purge the cylinder but also to cool it. Effective cooling is due in part to the fact that the scavenging air moves at a high velocity in a substantially spiral path down the internal wall of compression chamber 6. This swirling movement of scavenging air in compression chamber 6 is caused by a suitable design of the scavenging air inlet port. Where the port is controlled by poppet valve 5, means such as a fin (not shown) may be provided to appropriately deflect the scavenging air as it enters compression chamber 6.

The inlet port for the air/fuel mixture is relatively small in comparison with the other ports. Preferably, the inlet port for the scavenging air and the exhaust ports 7 are larger than those employed in conventional engines of the same size. Larger air inlet and exhaust ports facilitate the supply of an adequate throughput of scavenging air.

The engine operates throughout a complete two stroke cycle in the following manner. It is assumed that the cycle commences with piston 8 at bottom dead centre and commencing to rise in cylinder 4. Poppet valve 5 is closed shutting off the ingress of scavenging air. Compression chamber 6 would then be filled with substantially clean air. Poppet valve 2 would either be open or about to be open. In order to prevent any fuel from escaping to the atmosphere during scavenging, poppet valve 2 would not open until piston 8 had closed or almost closed exhaust ports 7.

When poppet valve 2 is open, a slightly rich fuel/air mixture is injected into the external combustion chamber 3. The fuel/air charge in part proceeds from external chamber 3, along passage 9 and into compression chamber 6. The substantially tangential disposition of passage 9 as shown in Fig.3 is arranged so that the charge enters compression chamber 6 in the same direction as the swirling movement of the air therein and is dispersed thereby. The amount of charge allowed to enter compression chamber 6 depends on the power and revolutions required during the operation of the engine. However, exhaust ports 7 close as piston 8 ascends before the fuel mixture is able to descend to that point in compression chamber 6. In any event, it is not necessary for the fuel mixture to descend more than about the half way point as the only purpose for entry of fuel into compression chamber 6 is to undergo dilution with the remaining scavenging air in order to provide a lean mix. The lean mix with excess oxygen in compression chamber 6 promotes complete combustion of all fuel. If a supercharge is required, poppet valve 2 must remain open until piston 8 has completely shut off exhaust ports 7.

After poppet valve 2 closes, piston 8 continues to rise in cylinder 4 on the compression stroke. The air in cylinder 4 is compressed in compression chamber 6, passage 9 and combustion chamber 3. However, the dimensions of passage 9 are such that the fuel/air mix adjacent to spark plug 1 remains sufficiently rich for it to be ignited by spark with a consequent explosion which forces burning fuel along passage 9 into compression chamber 6. The remaining charge, having been made lean by mixing with scavenging air, is ignited by the burning of the richer charge and burns without detonation. As the burning fuel is forced into compression chamber 6 in the same direction as the swirling movement of the air therein, the velocity of the air movement is increased and burning is promoted.

The relationship of combustion chamber 3 and compression chamber 6 is such that two separate zones with a significant temperature difference result. In the first place, a high temperature zone is produced near the centre of explosion in combustion chamber 3. Secondly, there is a zone of significantly lower temperature in compression chamber 6. As a consequence, there is effective separation of the high temperature zone in combustion chamber 3 and the excess oxygen from the leaner mix in compression chamber 6. The temperature of the excess oxygen is sufficiently low to inhibit formation of nitrogen oxides. Furthermore, due to the excess oxygen, substantially complete combustion is achieved resulting in the absence of carbon monoxide and hydrocarbons from the exhaust emissions. Another consequence is that reciprocation of piston 8 in cylinder 4 is a relatively cool operation so that the engine avoids the traditional heating problems normally associated with two stroke engines.

The power stroke then follows with blowdown taking place as cylinder 8 exposes exhaust ports 7. Poppet valve 5 now opens and scavenging air is forced into compression chamber 6 to fully purge it with clean air and to cool cylinder 4.

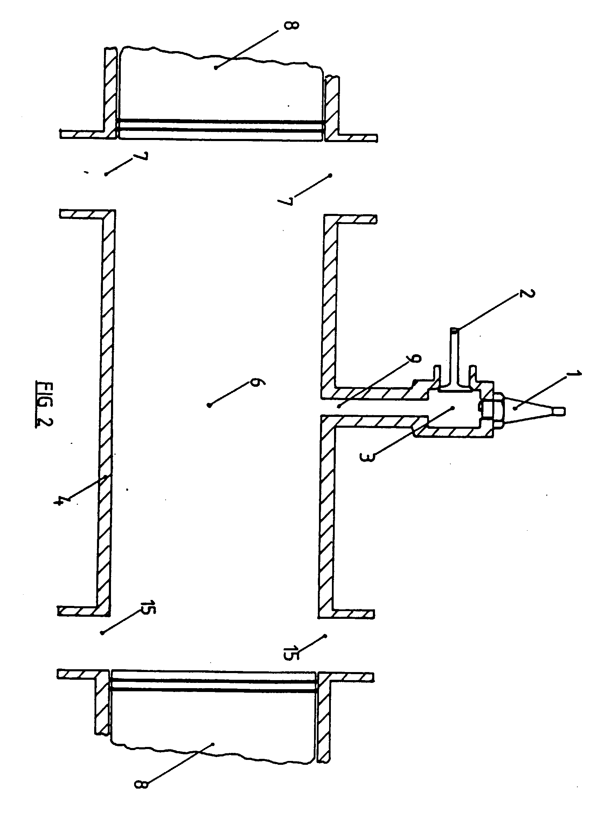

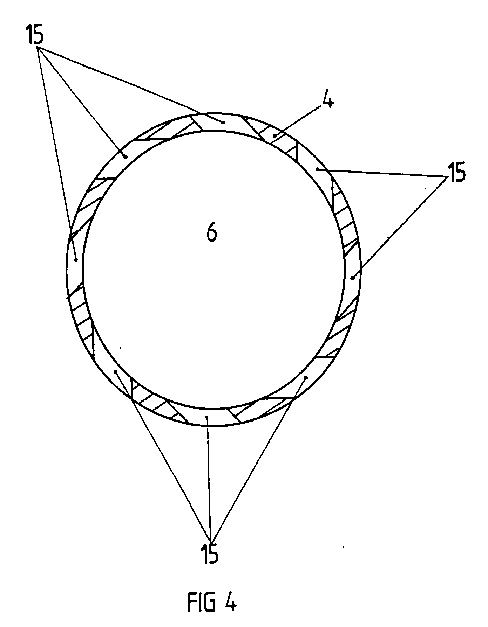

The cylinder arrangement illustrated in Fig.2 is for use with horizontally opposed pistons. The reference numerals used in this figure and operating principle remain the same as for Fig.1 except poppet valve 5 of Fig.1 is replaced by open ports 15 which are opened and closed by one of the reciprocating pistons 8. Ports 15 are arranged in cylinder 4 such that exhaust ports 7 are uncovered just before ports 15 so as to allow blowdown. As shown in Fig.4, the scavenging air inlet ports 15 are angled so that the air enters compression chamber 6 in a substantially tangential direction to produce a swirling movement of scavenging air therein.

An advantage of this engine is that the exhaust ports 7 may be unrestricted around the circumference of cylinder 4. This is due to the absence of transfer ports, which are required at the exhaust ports of most conventional two stroke engines, but are not necessary with the present design. This allows for more efficient breathing.

The present system also allows conventional two stroke engines to operate with a wet oil sump lubrication as lubrication oil is not required in the fuel. This permits engine sizes to compete with four stroke engines.

The two stroke engines described may be adapted to employ any one of a wide range of fuels such as petrol, gas and diesel oil and no particular additives are required.

The embodiment described with reference to Fig.1 may have the roles of exhaust port 7 and inlet valve 5 interchanged thus reversing the flow pattern of the scavenging air. This arrangement has the advantage of returning to combustion chamber 3 any residual exhaust gases and any gases that may have escaped past piston 8 during the expansion stroke.

In another modification, the embodiments of Figs. 1 and 2 may be provided with an additional inlet port controlled by a poppet valve for the admission of scavenging air into combustion chamber 3. This would allow combustion chamber 3 and passage 9 to be scavenged. This arrangement would be suitable for larger engines.

In a further modification, the additional port in the combustion chamber may function as an exhaust port. Thus any gas escaping past the piston(s) 8 during expansion would be returned to combustion chamber 3. Further, any unburned hydrocarbons would be oxidised while passing through hot combustion chamber 3.

In a still further embodiment, compression chamber 6 may be provided with a large exhaust port controlled by a poppet valve so that the other ports in the compression chamber 6, and, if provided, the additional port in the combustion chamber 3, would be arranged to function as inlet ports for scavenging air.

In any of the embodiments described, more than one external combustion chamber 3 may be provided, particularly in the case of large engines. The combustion chambers 3, each with a passage 9, may be spaced around compression chamber 6. Moreover, engines may employ more than one cylinder 4.

As previously described, the substantially tangential disposition of passage 9 as shown in Fig.3 is arranged so that the fuel charge enters compression chamber 6 in the same direction as the swirling movement of the air therein and is dispersed thereby. This would generally be the case. However, for certain capacity engines, it may be necessary for the fuel charge to enter compression chamber 6 in opposition to the direction of swirl to dampen excessive swirling movement of the air. In that case, there would still be effective dispersion of the fuel charge.

In a modification, the exterior surface of the cylinder may be provided with radiation fins to assist cooling.

## Claims

1. A two stroke internal combustion engine comprising:
a cylinder (4), a compression chamber (6) in the cylinder (4), at least one piston (8) adapted to reciprocate in the compression chamber (6), at least one inlet port (5; 15) communicating with the compression chamber (6), means supplying in operation scavenging air into the compression chamber (6) through the at least one inlet port (5; 15), at least one exhaust port (7) for the discharge of scavenging air and products of combustion from the compression chamber (6), a small external combustion chamber (3) having restricted communication (9) with the compression chamber (6), means introducing in operation a fuel rich fuel/air mixture into the combustion chamber (3) and ignition means (1) mounted in the combustion chamber (3) to ignite the fuel rich fuel/air mixture therein;
characterised in that said supplying means is an external blower such that in operation the scavenging air is supplied at high pressure, and said introducing means is such that in operation a part of the fuel rich fuel/air mixture passes before ignition into the compression chamber (6) and forms a fuel lean mixture with the scavenging air in the compression chamber (6), the fuel lean mixture subsequently being ignited by burning fuel from the combustion chamber (3).

2. An engine according to claim 1, characterised in that the at least one inlet port (5; 15) is designed to cause swirling movement of scavenging air in the compression chamber (6).

3. An engine according to claim 2, characterised in that the at least one inlet port (5) is provided with a fin to deflect scavenging air entering the compression chamber (6) to cause the swirling movement.

4. An engine according to claim 2, characterised in that the at least one inlet port (15) is disposed angularly so that scavenging air enters the compression chamber (6) in a substantially tangential direction to produce the swirling movement.

5. An engine according to any preceding claim, characterised in that a narrow passage (9) provides the restricted communication between the combustion chamber (3) and the compression chamber (6).

6. An engine according to claim 5, characterised in that the narrow passage (9) is offset so that it enters the compression chamber (6) in a substantially tangential direction.

7. An engine according to claim 2 and claim 6, characterised in that the narrow passage (9) is arranged so that said part of the fuel rich fuel/air mixture passes into the compression chamber (6) in the same direction as the swirling movement of the scavenging air therein.

8. An engine according to any preceding claim, characterised in that an additional port is provided in the combustion chamber (3) to permit scavenging thereof.

9. An engine according to any preceding claim, characterised in that the external blower also supplies air for the fuel rich fuel/air mixture to be injected into the combustion chamber (3).

10. An engine according to any preceding claim, characterised in that a plurality of the combustion chambers are spaced around the compression chamber and are in communication therewith.

## Patentansprüche

1. Zweitaktbrennkraftmaschine mit:
einem Zylinder (4), einem Kompressionsraum (6) in dem Zylinder (4), wenigstens einem Kolben (8), der sich in dem Kompressionsraum (6) hin- und herbewegt, wenigstens einem Einlaßkanal (5; 15), der mit dem Kompressionsraum (6) verbunden ist, Mitteln, die beim Betrieb Spülluft in den Kompressionsraum (6) durch den zumindest einen Einlaßkanal (5; 15) liefern, wenigstens einem Abgaskanal (7) für den Ablaß von Spülluft und Produkten der Verbrennung aus dem Kompressionsraum (6), einer kleinen externen Verbrennungskammer (3) mit beschränkter Verbindung (9) mit dem Kompressionsraum (6), Mitteln, die beim Betrieb ein treibstoffreiches Treibstoff/Luftgemisch in die Verbrennungskammer (3) führen und Zündungsmitteln (1), die in der Verbrennungskammer (3) angebracht sind, um das sich darin befindende treibstoffreiche Treibstoff/Luftgemisch zu zünden;
dadurch gekennzeichnet, daß die Mittel zum Liefern von Spülluft ein externes Gebläse sind derart, daß beim Betrieb die Spülluft unter hohem Druck geliefert wird, und daß die Einführmittel derartig sind, daß beim Betrieb ein Teil des treibstoffreichen Treibstoff/Luftgemisches vor Zündung in den Kompressionsraum (6) gelangt und ein treibstoffmageres Gemisch mit der Spülluft in dem Kompressionsraum (6) bildet, wobei das treibstoffmagere Gemisch anschließend durch Verbrennen von Treibstoff aus der Verbrennungskammer (3) gezündet wird.

2. Maschine nach Anspruch 1, dadurch gekennzeichnet, daß der zumindest eine Einlaßkanal (5; 15) konstruiert ist, um Wirbelbewegung von Spülluft in dem Kompressionsraum (6) zu bewirken.

3. Maschine nach Anspruch 2, dadurch gekennzeichnet, daß der zumindest eine Einlaßkanal (5) mit einer Flosse versehen ist, um in den Kompressionsraum (6) eintretende Spülluft zum Bewirken der Wirbelbewegung abzulenken.

4. Maschine nach Anspruch 2, dadurch gekennzeichnet, daß der zumindest eine Einlaßkanal (15) unter einem Winkel so angebracht ist, daß Spülluft in den Kompressionsraum (6) in einer im wesentlichen tangentialen Richtung eintritt, um die Wirbelbewegung zu produzieren.

5. Maschine nach einem der vorhergehenden Ansprüche, dadurch gekennzeichnet, daß ein schmaler Durchgang (9) die beschränkte Verbindung zwischen der Brennkammer (3) und dem Kompressionsraum (6) bildet.

6. Maschine nach Anspruch 5, dadurch gekennzeichnet, daß der schmale Durchgang (9) so versetzt ist, daß er in den Kompressionsraum (6) in einer im wesentlichen tangentialen Richtung eintritt.

7. Maschine nach Anspruch 2 und Anspruch 6, dadurch gekennzeichnet, daß der schmale Durchgang (9) so angeordnet ist, daß der Teil des treistoffreichen Treibstoff/ Luftgemisches in derselben Richtung in den Kompressionsraum (6) gelangt, wie die Wirbelbewegung der sich darin befindenden Spülluft ist.

8. Maschine nach einem der vorhergehenden Ansprüche, dadurch gekennzeichnet, daß ein zusätzlicher Kanal in der Verbrennungskammer (3) vorgesehen ist, um deren Spülen zu ermöglichen.

9. Maschine nach einem der vorhergehenden Ansprüche, dadurch gekennzeichnet, daß das externe Gebläse auch Luft für das treibstoffreiche Treibstoff/Luftgemisch liefert, das in die Verbrennungskammer (3) gespritzt werden soll.

10. Maschine nach einem der vorhergehenden Ansprüche, dadurch gekennzeichnet, daß eine Vielzahl von Verbrennungskammern mit Abstand um den Kompressionsraum herum und in Verbindung mit diesem angeordnet sind.

## Revendications

1. Moteur à combustion interne à deux temps comportant :
un cylindre (4), une chambre de compression (6) dans le cylindre (4), au moins un piston (8) prévu pour se déplacer de manière alternative dans la chambre de compression (6), au moins un orifice d'entrée (5; 15) qui communique avec la chambre de compression (6), des moyens qui délivrent en fonctionnement de l'air de balayage dans la chambre de compression (6) à travers l'orifice d'entrée (5; 15), au moins un orifice d'échappement (7) pour l'évacuation de l'air de balayage et des produits de combustion de la chambre de compression (6), une petite chambre de combustion externe (3) ayant une communication étranglée (9) avec la chambre de compression (6), des moyens destinés à introduire en fonctionnement un mélange carburant/air riche en carburant dans la chambre de combustion (3) et des moyens d'allumage (1) montés dans la chambre de combustion (3) afin d'y allumer le mélange carburant/air riche en carburant;
caractérisé en ce que lesdits moyens d'alimentation sont constitués par un ventilateur externe de telle sorte que, en fonctionnement, l'air de balayage est délivré à haute pression, et lesdits moyens d'introduction sont tels que, en fonctionnement, une partie du mélange carburant/air riche en carburant passe avant allumage dans la chambre de compression (6) et forme un mélange pauvre en carburant avec l'air de balayage dans la chambre de compression (6), le mélange pauvre en carburant étant ensuite allumé par le carburant qui brûle provenant de la chambre de combustion (3).

2. Moteur selon la revendication 1, caractérisé en ce que l'orifice d'entrée (5; 15) est conçu pour provoquer un mouvement tourbillonnant de l'air de balayage dans la chambre de compression (6).

3. Moteur selon la revendication 2, caractérisé en ce que l'orifice d'entrée (5) est pourvu d'une ailette afin de dévier l'air de balayage qui entre dans la chambre de compression (6) de façon à provoquer le mouvement tourbillonnant.

4. Moteur selon la revendication 2, caractérisé en ce que l'orifice d'entrée (15) est disposé de manière inclinée de telle sorte que l'air de balayage entre dans la chambre de compression (6) dans une direction sensiblement tangentielle afin de produire le mouvement tourbillonnant.

5. Moteur selon l'une quelconque des revendications précédentes, caractérisé en ce que un passage étroit (9) procure la communication étranglée entre la chambre de combustion (3) et la chambre de compression (6).

6. Moteur selon la revendication 5, caractérisé en ce que le passage étroit (9) est décalé de telle sorte qu'il entre dans la chambre de combustion (3) dans une direction sensiblement tangentielle.

7. Moteur selon la revendication 2 et la revendication 6, caractérisé en ce que le passage étroit (9) est agencé de telle sorte que ladite partie du mélange carburant/air riche en carburant passe dans la chambre de compression (6) dans la même direction que le mouvement tourbillonnant de l'air de balayage.

8. Moteur selon l'une quelconque des revendications précédentes, caractérisé en ce que un orifice additionnel est prévu dans la chambre de combustion (3) afin de permettre le balayage.

9. Moteur selon l'une quelconque des revendications précédentes, caractérisé en ce que le ventilateur externe délivre également de l'air pour le mélange carburant/air riche en carburant devant être injecté dans la chambre de combustion (3).

10. Moteur selon l'une quelconque des revendications précédentes, caractérisé en ce que plusieurs chambres de combustion sont espacées autour de la chambre de compression et sont en communication avec celle-ci.
